# EUROPEAN PATENT SPECIFICATION

(11) **EP 4 523 986 B1**
(45) Date of publication and mention of the grant of the patent: **09.12.2026**
(21) Application number: 23197635.8
(22) Date of filing: 15.09.2023
(51) Int. Cl.: B60W 30/095, B60K 35/00, B60W 50/14, B60W 50/16

(54) **COMMUNICATING RELEVANCE INFORMATION VIA PHASE ANGLE OF A PERIODIC FUNCTION**
ÜBERMITTLUNG VON RELEVANZINFORMATIONEN ÜBER PHASENWINKEL EINER PERIODISCHEN FUNKTION
COMMUNICATION D'INFORMATIONS DE PERTINENCE PAR L'INTERMÉDIAIRE D'UN ANGLE DE PHASE D'UNE FONCTION PÉRIODIQUE

(43) Date of publication of application: 19.03.2025
(73) Proprietor: HONDA MOTOR CO., LTD., Tokyo 105-8404 (JP)
(72) Inventor: Wang, Chao, 63073 Offenbach/Main (DE)
(74) Representative: Beder, Jens

(56) References cited:
- DE-A1- 102005 048 542
- DE-A1- 102012 210 145
- FR-A1- 3 076 503

## Description

The invention is in the field of assistance systems for assisting a user in a dynamic environment and of human machine interfaces (HMI). In particular, a computer-implemented method, a computer program, and an assistance system for outputting information relevant for acting in the dynamic environment to the user is proposed.

Assistance systems for mobility-related tasks assist a user, for example a user operating an agent by supporting traffic navigation in the automotive, aeronautical or maritime domain. Assistance systems contribute positively to an operator's situation assessment and to his navigation skills and therefore enhance safety in the dynamically changing mobility environment, in which the assisted person is operating.

The user may be an assisted person operating an agent such as an ego-vehicle in a road traffic environment.

In particular, in a highly dynamic environment such as a current road traffic environment, complex situations with multiple choices for a next action to be performed by the user driving the ego-vehicle occur. The assistance system assists the user by providing notifications, e.g. notification on a predicted event in the traffic environment involving a risk for the user. The assistance system comprises a human machine interface (HMI) for outputting the notifications to the user. The HMI often uses repeated flashing of icons on a visual display, output of sound bursts with a predetermined burst repetition frequency and loudness, or the change of pitch of the output sound, for providing the notification by stimulating respective sensory organs of the assisted user. The HMI thus relies on periodic signals for conveying the risk-related information. However, it is still a challenge to generate the stimuli, which not only raise the awareness of the user, but also communicate information concerning a severity of the predicted risk, the tendency of changing of the predicted risk, and spatial information about the predicted risk. Current notification methods basing on periodic notifications use either a frequency or an amplitude for modulating risk related information onto stimuli provided to the assisted person.

EP 3 361 466 A1 discloses a risk-based driver assistance system for approaching intersections of limited visibility.

EP 4 254 121 A1 discloses an assistance system for dynamic environments.

EP 2 950 294 A1 proposes a method and a vehicle, which include an advanced driver assistance system fora risk-based traffic scene analysis.

EP 4 068 153 A1 discloses an advanced driver assistance system for assisting a driver of a vehicle.

Patent application FR 3 076 503 A1 discloses a vehicle seat assembly that comprises a vehicle seat including a seat and a backrest, and a plurality of vibrating devices arranged in at least one of the seat and the backrest. The plurality of vibrating devices is distributed into concentric subassemblies, and a unit control unit of the seat assembly is configured to control the vibrating devices by sub-assemblies.

Hence, the task of improving existing assistance systems with regard to generating and outputting risk related information to an assisted person in an efficient manner and without distracting the person of its primary objectives requires addressing.

A computer-implemented method for informing a user of a risk for the user or a user-operated agent comprises a step of: acquiring sensor information of the environment of the user or the user-operated agent; predicting a risk for the user or the user-operated agent based on the acquired sensor information; determining a risk measure for the predicted risk. The method proceeds with determining a frequency and a phase angle of a periodic function based on the determined risk measure; and then controlling output of an information signal based on the determined periodic function via at least one actuator to the user. The method comprises determining the phase angle based on a sum of the determined risk measure and a distance between the user or the user-operated agent and at least one physical object.

A location measure refers to a relative location of the physical object in the environment of the user or the user-operated agent, wherein the location is relative to the user or the user-operated agent. The relative location may include a distance and a direction information, particularly relative to the user or user operated agent.

The method may warn a user of a predicted risk in the environment, e.g. a risk predicted by a driver assistance system of a vehicle driven by the user (ego-vehicle) by outputting a warning signal as the information signal.

The physical object may be another agent, another vehicle, a static infrastructure element in the environment of the user or the ego-agent, or even another human person or a group of persons, for example.

The proposed method uses the phase angle of a periodic function, e.g., a sine function in addition to the frequency of the periodic function to combine information on the predicted risk.

The risk measure may encompass information including a probability of occurrence of the predicted risk, a severity of consequences in case of the risk actually occurring, and a tendency of change of the risk. In particular by using the phase angle of the periodic function to inform the assisted user about the tendency of the change of the calculated risk measure, the computer implemented method provides an advantageous HMI for communicating comprehensive information available on predicted risks in the dynamic environment available in contemporary assistance systems in an intuitive and computationally efficient manner to the assisted person. When comparing the alteration of frequency in a periodic function to changing (adjusting) the phase angle, the advantage of adjusting the phase angle lies in its ability to offer insights into the trend of the changing risk value, instead of showing the absolute risk value. This becomes apparent after the assisted user has implemented specific measures to mitigate the risk, as the phase angle adjustment provides better indications of whether the implemented measures are effectively improving the situation and thereby reducing the risk inherent in the situation. More detailed examples will be introduced in the later sections. Another advantage is that when implementing phase angle with an array of spatial based actuators, they can indicate the position of the danger.

The proposed HMI for the assistance system is interoperable with a plurality of different embodiments, which may include head-up displays providing visual stimuli such as flashing icons, sound feedback with changing pitch, or tactile interfaces integrated into seats, seat belts or steering devices for providing haptic stimuli.

Hence an intuitive understanding of risk trends in the current dynamic scenario for the user by using array of actuators is possible. Another advantage is that when implementing phase angle with an array of spatially arranged actuators, they can indicate the position of the risk or potential danger.

A sensor such as an acoustic sensor, a radar sensor, a temperature sensor may provide the sensor information. Alternatively or additionally, a wireless direction finder including a wireless receiver and a directional antenna may be used with a beacon collocated with the physical object for providing directional sensor information.

The computer-implemented method according an embodiment informs the user of a risk for the user or a user-operated agent. The method of this particular embodiment comprises acquiring sensor information of the environment of the user or the user-operated agent, predicting a risk for the user or the user-operated agent based on the acquired sensor information, and determining the risk measure for the predicted risk based on the acquired sensor information.

The predicted risk may be a possible event that the assistance system predicts to occur in the environment of the user or the agent operated by the user (ego agent) and involving the user or the ego-agent.

The predicted event may be a predicted collision involving the user or the ego-agent, and the at least one other physical object present in the environment. The at least one other physical object may be a static object, or a moving object, e.g. another vehicle.

The ego-agent may be an ego-vehicle. Alternatively, the ego-agent may be a remotely piloted vehicle, or an at least partially autonomously operating vehicle, e.g. an unmanned aerial vehicle (UAV).

The user (assisted person) may be a pedestrian, e.g. a visually impaired person receiving guidance by the assistance system, which is installed on a mobile device that the assisted person is carrying.

The computer-implemented method according to an embodiment further comprises predicting at least one trajectory of user or the user-operated agent and the at least one physical object in the environment, and determining at least one time-to-minimum distance between the user or the user-operated agent and the at least one physical object based on the predicted at least one trajectory, and calculating the risk measure based on the determined time-to-minimum distance.

For example, the computer-implemented method may comprise determining the at least one time-to-minimum distance *t*_{min*_distance*} according to ${t}_{min_ distance} = - \frac{Δ \vec{p} ⋅ Δ \vec{v}}{Δ \vec{v} ⋅ Δ \vec{v}} ;$ with Δ*̅p̅*̅ representing the vector of relative position of the at least one physical object relative to the user or relative to the user-operated agent. The term Δ*̅v̅*̅ corresponds to a relative velocity between the user and the at least one other physical object, or between the user-operated agent and the at least one other physical object in the environment of the user or in the environment of the agent operated by the user.

The time-to-minimum distance *t*_{min_*distance*} may form the basis for the location measure in one particular embodiment of the method.

The computer-implemented method may comprise a step of calculating the risk measure R based on determining a time-to-minimum distance according to $R = \left\{\begin{matrix}\frac{1}{{t}_{min_ distance}} , if 0 < {t}_{min_ distance} \leq 2 \\ 0 , otherwise\end{matrix}\right. ;$

Hence a computationally efficient manner of determining a collision risk may be used in combination with the equally efficient determination of the periodic function controlling the output of the actuator.

According to an embodiment of the computer-implemented method, the method comprises calculating a time-to-collision for at least one predicted collision between the user or the user-operated agent, and calculating the risk measure for the predicted at least one collision based on the calculated time-to-collision.

The method provides an intuitive manner of presenting changes and trends of collision risks in road traffic scenarios.

According to an embodiment of the computer-implemented method, the periodic function is a trigonometric function, e.g., a sine function or a cosine function.

Trigonometric functions enable to base efficiently generating control signals for a plurality of types of actuators for outputting stimuli to human user thereon, and offer the possibility to use the parameters amplitude, frequency and phase angle for transmitting information.

In one embodiment of the computer-implemented method, the step of determining an amplitude, the frequency, and the phase angle of the periodic function includes mapping the calculated risk measure to corresponding values of the amplitude, the frequency, and the phase angle of the periodic function.

The computer-implemented method according to an embodiment comprises setting the amplitude of the periodic function based on the calculated risk measure multiplied with a first factor, setting the frequency of the periodic function based on the calculated risk measure multiplied with a second factor, setting the phase angle of the periodic function based on the calculated risk measure multiplied with a third factor.

Hence computationally efficient methods for determining the periodic function are available, which facilitate a real-time implementation.

According to an embodiment of the computer-implemented method, the method comprises outputting the information signal (warning signal) based on the determined periodic function by varying at least one parameter of an output of the at least one actuator, wherein the at least one parameter includes at least one of a brightness of a visual output and a vibration of a haptic output, or displaying an icon.

The determined periodic function provides a suitable basis for controlling a plurality of different modalities of conveying information via stimuli perceivable by the assisted user.

The computer-implemented method according to an embodiment comprises determining the frequency based on a sum of the calculated risk measure and a derivative of the calculated risk measure.

According to an embodiment of the computer-implemented method, the method comprises outputting the information signal, e.g. a warning signal, based on the modulated periodic function via a plurality of actuators of an array of actuators of a human machine interface to the user, wherein the periodic function driving each actuator of the plurality of actuators includes the phase angle additionally modulated based on a spatial position of the respective actuator.

Using an actuator that includes multiple elementary actuators arranged in a spatial layout, and further determining the phase angle of the periodic function according to the position of the individual elementary actuator enables to convey spatial information to the assisted user using the individually modulated stimuli provided by the multiple actuators. Arranging the elementary actuators in an array enable to generate stimuli showing a ripple effect thereby conveying additionally a spatial information on the predicted risk.

In one embodiment of the computer-implemented method, the array of actuators is centered on the user or user-operated agent, and the step of modulating the phase angle based on a spatial position of the respective actuator includes modulating the phase angle based on a distance of the respective actuator to the physical object.

In yet another embodiment of the computer-implemented method computer-implemented method, the array of actuators is centered on the physical object, and the step of determining the phase angle based on a spatial position of each actuator includes modulating the phase angle based on a distance of the respective actuator to the user or user-operated agent.

According to an aspect, a computer program with program-code means for executing the steps of one of the embodiments of the method according to the first aspect provides an advantageous solution, when the program is executed on a computer or digital signal processor.

According to a third aspect, an assistance system for informing a user of a risk for the user or a user-operated agent comprises an acquisition module configured to acquire information of the environment of the user or the user-operated agent and at least one processor. The at least one processor is configured to predict a risk for the user or the user-operated agent based on the acquired information, to determine a risk measure, to determine a frequency and a phase angle of a periodic function based on the calculated risk measure, and to control outputting an information signal based on the determined periodic function to the user via at least one actuator. The at least one processor is configured to determine the phase angle based on a sum of the determined risk measure and a distance between the user or the user-operated agent and at least one physical object.

An assistance system for warning a user of a risk for the user or a user-operated agent in an environment of the user or the user-operated agent according to a third aspect may in particular comprise: at least one sensor configured to acquire sensor information of the environment of the user or the user-operated agent; at least one processor configured to predict a risk for the user or the user-operated agent based on the acquired sensor information, to calculate a risk measure for the predicted risk based on the acquired sensor information, to determine a frequency and a phase angle of a periodic function based on the calculated risk measure, and to control outputting an information signal based on the determined periodic function to the user via at least one actuator.

The assistance system may include at least one actuator.

The computer program according to the second aspect and the assistance system according to the third aspect provide corresponding advantages as discussed in detail with regard to the computer-implemented method according to the first aspect.
Fig. 1 displays a simplified flowchart of a computer-implemented method according to an embodiment,
Fig. 2 displays an exemplary periodic function of an embodiment,
Fig. 3 illustrates a first example of a predicted risk and a corresponding stimulus signal output by the method,
Fig. 4 illustrates a second example of a predicted risk and a corresponding stimulus signal output by the method,
Fig. 5 illustrates an actuator array centered on the physical object according to a first embodiment,
Fig. 6 illustrates an example of the actuator array centered on the physical object according to the first embodiment in an application example.
Fig. 7 illustrates an actuator array centered on the user according to a second embodiment,
Fig. 8 illustrates a first application scenario using a visual HMI in a road traffic environment,
Fig. 9 illustrates a second application scenario using an acoustic HMI in a road traffic environment,
Fig. 10 illustrates a third application scenario using a haptic HMI in a road traffic environment,
Fig. 11 illustrates a fourth application scenario using a haptic HMI adapted for assisting a visually impaired person moving in the environment,
Fig. 12 illustrates a fifth application scenario using a visual HMI integrated with infrastructure for assisting persons moving in the environment,
Fig. 13 illustrates a sixth application scenario using a visual or audible HMI integrated with a device for assisting persons in moving towards a target location in the environment, and
Fig. 14 displays a simplified block diagram of the assistance system.

In the figures, corresponding elements have the same reference signs. The discussion of the figures avoids discussion of same reference signs in different figures wherever considered possible without adversely affecting comprehensibility and avoiding unnecessary repetitions for sake of conciseness. The proportions and dimensions of the elements shown in the figures do not represent the respective devices and application scenarios to scale, but are merely chosen to describe the structure and function of the system and its components.

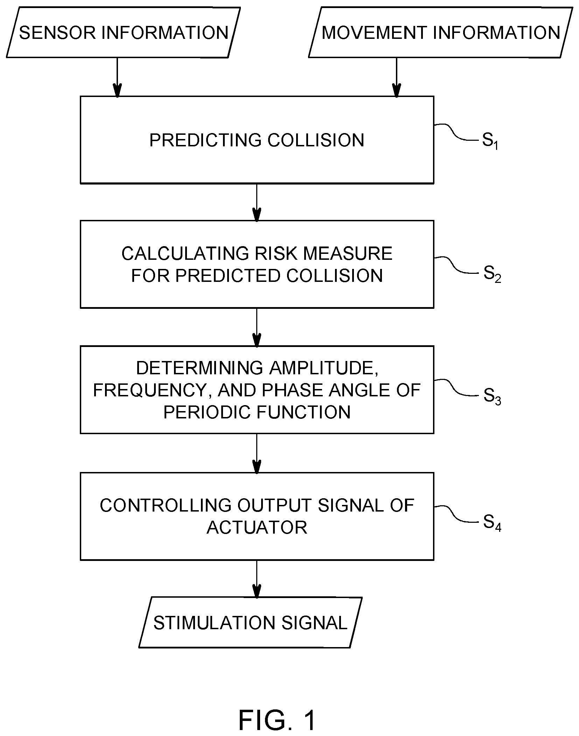

Fig. 1 displays a simplified flowchart of a computer-implemented method according to an embodiment.

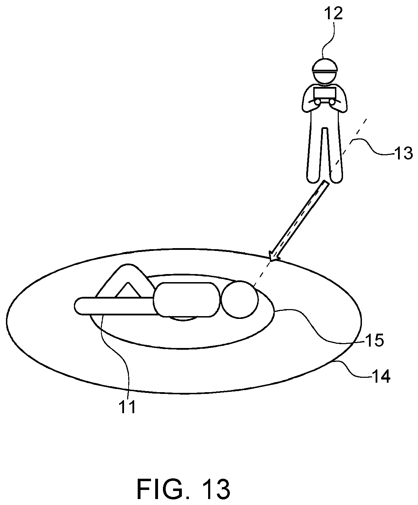

The following description focuses on a description of an embodiment in a road traffic scenario, using a warning signal and a risk measure based on a predicted risk for discussing specific embodiments. Alternative applications of the computer-implemented method using an information signal including a phase angle Φ of a periodic function determined based on a location measure will be discussed with reference to fig. 13 in particular.

The embodiment of fig. 1 uses a collision risk as a particular example of a predicted event in a road traffic scenario. The assistance system 100 of fig. 1 is a driving assistance system assisting the user in operating an ego-vehicle in a road traffic environment. The method for warning a user of a risk for the user operating the ego-vehicle in an environment of the ego-vehicle may form part of an advanced driver assistance system (ADAS).

The computer-implemented method starts with acquiring sensor information of the environment of the ego-vehicle using at least one sensor.

The method may also acquire movement information of the ego-vehicle using at least one further sensor.

In step S1 of the method, the assistance system 100 predicts a risk for the user or the user-operated agent based on the acquired sensor information. In particular, the assistance system 100 predicts, whether a collision event is possible based on the acquired sensor information and the movement information of the ego-vehicle.

In step S2, the method calculates a risk measure for the predicted risk based on the acquired sensor information. In the particular example of fig. 1, the method calculates a risk measure for the predicted collision between the ego-vehicle 3 and at least one other object (other vehicle 4) in the environment of the ego-vehicle 3. The at least one other object may be another vehicle 4 on a collision course with the ego-vehicle 3, which would result in a collision in case no preventive action is taken by either the assisted user or the other vehicle 4.

The computer-implemented method according to an embodiment calculating the risk measure R based on determining a time-to-minimum distance according to $R = \left\{\begin{matrix}\frac{1}{{t}_{min_ distance}} , if 0 < {t}_{min_ distance} \leq 2 \\ 0 , otherwise\end{matrix}\right. ;$

This embodiment concerns a collision event between the user or an ego-vehicle 3 and a physical object such as another vehicle 4. The parameter r *t*_{min*_distance*} denotes the time-to-minimum distance between the ego-vehicle 3 and the other vehicle 4. Alternatively, a time-to-contact (TTC) predicted in known assistance systems addressing collision avoidance in a traffic environment may be used instead.

In step S3 following to step S2, the method proceeds with determining a frequency and a phase angle of a periodic function based on the calculated risk measure for the predicted risk. In step S3 of fig. 1, the method also determines an amplitude of the periodic function.

The periodic function with the determined amplitude, the frequency ω and the phase angle Φ (determined periodic function, modulated periodic function) forms the basis for stimulating the assisted person.

Having determined the amplitude, the frequency and the phase angle of the periodic function, the method proceeds with step S4. In step S4, the method generates a control signal for controlling the actuator 110 based on the determined periodic function, and outputs the generated control signal to the actuator 110 in order to control the output signal (stimulation signal, stimulation 112) of the actuator 110 based on the determined periodic function via the control signal.

The output signal (stimulation signal) of the actuator 110 provides a stimulation of the assisted user and hence includes the information on the predicted risk included in the risk measure.

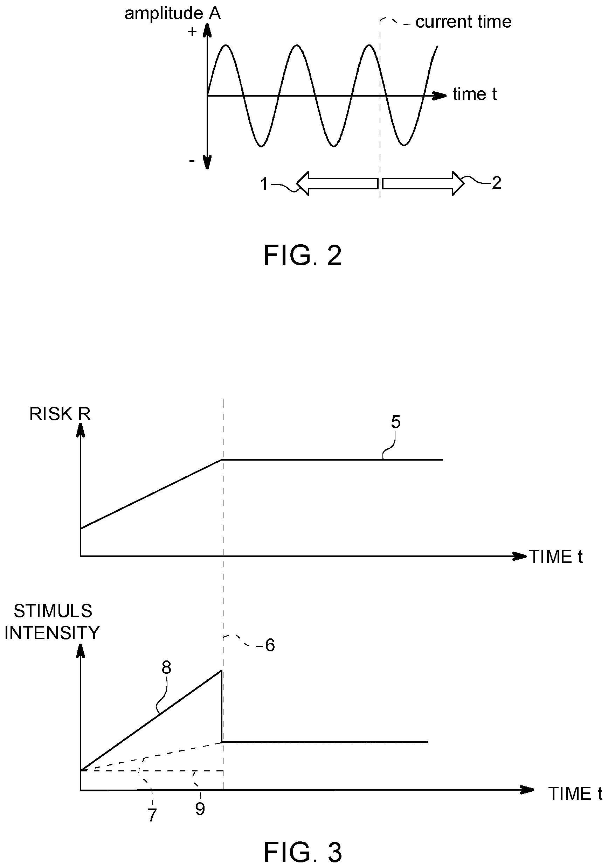

Fig. 2 displays a sine function as an exemplary periodic function of an embodiment.

In particular, fig. 2 shows the sine function $x \left(t\right) = A sin \left(ωt+Φ\right) ;$ with an amplitude A in direction of the ordinate and a time t on the abscissa. Determining the phase angle Φ of the sine function based on the risk measure has the effect of increasing or decreasing the phase angle Φ dependent on the calculate risk measure for the predicted risk.

Increasing the phase angle Φ of the sine function has the effect of shifting the depicted sine curve to the left, e.g. might be interpreted as a faster elapse of time, as illustrated by arrow 1 in fig. 2.

Decreasing the phase angle Φ of the sine function has the effect of shifting the depicted sine curve to the right, e.g. might be interpreted as a slower elapse of time, as illustrated by arrow 2.

In case the risk measure of the predicted risk increases, the frequency ω, and possibly, also the amplitude A of the sine curve, increase. The resulting stimulus signal output by the actuator 110 will exert a stronger stimulation on the assisted person. Due to the respectively increasing phase angle Φ of the sine function, the stimulation signal generated based on the determined sine curve will even more increase than without the determined phase angle Φ. More importantly, the stimulation generated based on the determined sine curve provides the assisted user with information reflecting how a trend of the predicted risk changes, in particular how the trend of the changing risk points to an increase in risk for a predicted event. This is not trivial, as the user can understand whether a measure to mitigate the risk is effective or not effective.

In a corresponding manner, in case of a decreasing risk measure of the predicted risk, the frequency ω, and possibly, also the amplitude A of the sine curve decrease. The resulting stimulus signal output by the actuator will exert a smaller stimulation on the assisted person. Due to the respectively decreasing phase angle Φ of the sine function, the stimulation signal generated based on the determined sine curve will even more decrease than without the determined phase angle Φ. Hence, the stimulation generated based on the determined sine curve provides the assisted user with information reflecting how a trend of the predicted risk changes, in particular how the trend of the changing risk points to an decrease in risk for a predicted event. Again, the user can understand whether a measure he implements in order to mitigate the risk is effective or not effective.

The periodic function is described with reference to the particular example of the sine function. The periodic function may be another trigonometric function, e.g., a cosine function.

Fig. 3 illustrates a first example of a predicted risk and a corresponding stimulus signal output by the method.

The upper portion of fig. 3 displays a curve 5, which indicates a calculated risk measure R for a predicted risk over a time t. The calculated risk measure R increases until a time 6 and then remains constant for the remainder of curve 5.

The lower portion of fig. 3 displays three curves 7, 8, 9, which each indicate a stimulus intensity of a stimulus signal that is calculated based on the risk measure R for the predicted risk over a time t. Fig. 3 displays the curve 5 of the calculated risk measure and the curves 7, 8, 9 of the stimulus intensity with a common time scale t on the abscissa.

The stimulus intensity may depend on an the repetition frequency of the flashing ( shorter repeating time of a flashing) of a displayed warning icon of the human HMI.

The first curve 7 indicating the stimulus intensity is generated and output by the actuator 110 based on a determined frequency or a determined amplitude of the periodic function according to prior art.

The second curve 9 indicating the stimulus intensity is generated and output by the actuator 110 only based on a determined phase angle Φ according to the method of fig. 1. The stimulus intensity of curve 9 only reflects the change of the risk. The stimulus intensity of curve 9 essentially corresponds to a gradient of the risk curve 5 in the upper portion of fig. 3.

The third curve 8 indicating the stimulus intensity is generated and output by the actuator 110 based on a determined frequency or a determined amplitude of the periodic function, and additionally the determined phase angle Φ according to the method of fig. 1.

When comparing the third curve 8 with the first curve 7, it is evident that the stimulus signal generated using the method of fig. 1 amplifies the trends of the corresponding risk measure of the upper portion of fig. 3. Using the method according to an embodiment for generating the stimulus signal results in a larger gradient of the third curve 8 when compared with the first curve 7 using a known method for generating the warning signal.

This effect ceases when the calculated risk R remains constant after the time 6 has elapsed. Both the third curve 8 and the first curve 7, provide the same intensity for the stimulus signal generated using the method of fig. 1 as represented by the third curve 8 or a known method as represented by the first curve 7 for generating the stimulus of the warning signal for points in time t after the time 6.

The computer-implemented method of fig. 1, determines the periodic function used as basis for stimulus generation by determining the frequency ω and the phase angle Φ based on the calculated risk measure. This has the effect for an increasing value of the risk measure that the stimulus increases disproportionally when compared with an amplitude- or frequency-modulated periodic function according to the known approaches. Respectively, for a decreasing value of the calculated risk measure the stimulus decreases disproportionally compared to an amplitude- or frequency-modulated periodic function according to the known approaches. Thus, the output stimulus reflects in its intensity (intensity brightness, flashing of an icon ,.. ) the trend of the risk change, which supports the awareness of the user with regard to the predicted future evolvement of the risk based on the calculated risk measure.

Alternatively to manipulating the phase angle Φ, another method to emphasize the trend of the risk is adding a derivative of the risk measure R directly to the frequency ω, which will result in similar effect. For example, $ω = R + R ′ ;$ with R' denoting the first derivative $\frac{dR}{dt}$ of the risk measure R.

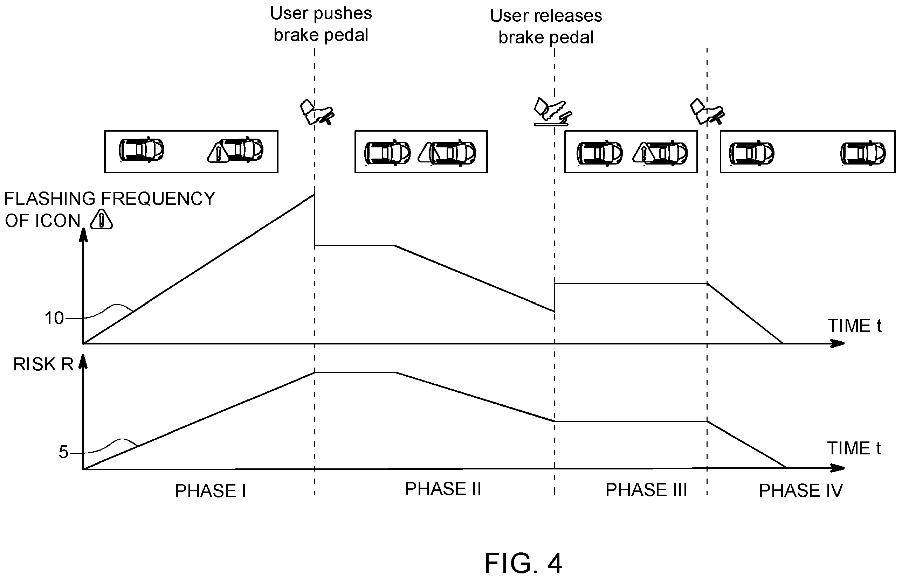

Fig. 4 illustrates a second example of a predicted risk and a corresponding stimulus signal output by the computer-implemented method according to an embodiment based on a real driving scenario.

The lower portion of fig. 4 displays a curve 5, which indicates a calculated risk measure R for a predicted risk over a time t. The risk measure R is shown for four successive phases I, II, III, and IV in time.

The predicted risk may relate to a collision risk. The calculated risk measure R may be determined based on a time to contact (TTC) corresponding to an estimated time until the collision is predicted to occur.

The mid portion of fig. 4 displays a curve 10, which indicates a flashing frequency of a warning icon displayed by a HMI and that is determined based on the risk measure R for the predicted risk at the corresponding time t. Fig. 4 displays the curve 5 of the calculated risk measure R and the curve 10 of the flashing frequency of the stimulus signal with a common time scale t on the abscissa. The stimulus signal is generated using the computer-implemented method according to fig. 1.

In phase I, the calculated risk measure R increases linearly. The flashing frequency of the icon also increases linearly. Using the method of fig. 1 results in an amplified warning due to a disproportionally increased flashing of the displayed icon, indicating the trend of an increasing risk.

In phase II, the calculated risk measure R is constantly increasing. At the turn from phase I to phase II, the user may have operated a brake pedal of the ego-vehicle 3.The flashing frequency of the icon now drops to a lower value corresponding to the respective risk value in phase II, as the component of the phase angle Φ indicating the trend of the predicted risk ceases. This cue indicates to the user that the braking operation is effective. During the second portion of the phase II, the braking action performed by the user results in a linear decrease of the calculated risk measure: the breaking action of the user in reaction to the traffic scenario proves effective. The flashing frequency of the displayed icon decreases.

When transiting from phase III to phase IV, the user releases the brake pedal. The calculated risk measure R reached a value deemed acceptable by the user. In consequence, the performing the method of fig. 1 results in an increased flashing frequency. The increased flashing frequency of the icon results from the determined periodic function, in particular the phase angle Φ of the periodic function ceasing to exhibit the trend of the decreasing calculated risk measure. The increased flashing rate indicates the user the need to apply the brake of the ego-vehicle 3, which he does on the turn from phase III to phase IV. During phase IV, the ego-vehicle 3 further decelerates resulting in a further increase of the distance to the preceding other vehicle 4, until the calculated risk for running into the tail end of the other vehicle 4 for the ego-vehicle is predicted to cease entirely (reaches zero).

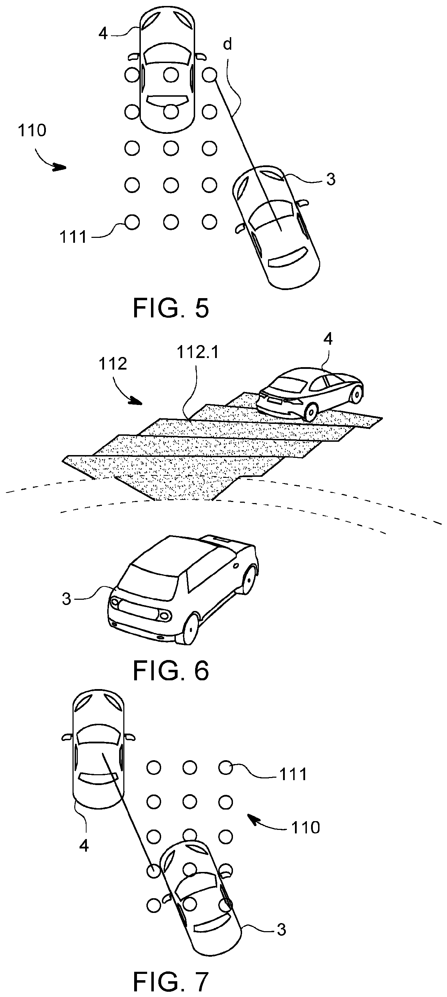

Fig. 5 illustrates an actuator array centered on the physical object according to a first embodiment.

The first embodiment, the method includes outputting the warning signal based on the modulated periodic function via a plurality of actuators elements 111 of the actuator 110 representing an array of actuators of a human machine interface to the user. The periodic function driving each actuator element 111 of the plurality of actuators includes the phase angle Φ further modulated based on a spatial position of the respective actuator 111 of the array of actuators. The array of actuators is spatially associated (centered) on the user, in fig. 5 on the user-operated agent. In fig. 5, the user-operated agent is an ego-vehicle 3 driven by the user. The other agent is another vehicle 4 in the environment of the ego-vehicle 3.

In case of fig. 5, determining the phase angle based on a spatial position of the respective actuator includes modulating the phase angle Φ based on a distance d of the respective actuator to the other vehicle 4 (physical object).

In particular, the assistance system 100 may generate and output the control signal to the actuator 110 based on respectively modified phase angle Φ: $Φ = R + distance ,$ which is determined for each actuator element 111 of the actuator 110 individually, taking the position of the respective actuator element 111 into account. The term "distance" denotes a distance between the respective actuator element 111 and the other vehicle 4 involved in the predicted event.

Then the stimulus signal output by the actuator 110 can provide spatial information on the predicted risk. For example, a ripple effect that is centered on the ego vehicle 3 indicates from which direction relative to the ego-vehicle 3 the driving may influence a future evolvement of the predicted risk.

Fig. 6 illustrates an example of the actuator array centered on the physical object according to the first embodiment in an application example. The stimulus signal output by the actuator array shows to provide spatial information on the predicted risk by a ripple effect 112.1 shown in the visualization 112 output by the actuator array that is centered on the ego-vehicle 3 and that indicates from which direction relative to the ego-vehicle 3 the driving may influence a future evolvement of the predicted risk present in the environment of the ego-vehicle 3.

Fig. 7 illustrates an actuator array centered on a physical object according to a second embodiment.

In the second embodiment, the method includes outputting the warning signal based on the modulated periodic function via a plurality of actuators elements 111 of the actuator 110 representing an array of actuators of a human machine interface to the user. The periodic function driving each actuator element 111 of the plurality of actuators includes the phase angle Φ further modulated based on a spatial position of the respective actuator 111 of the array of actuators. The array of actuators is spatially associated (centered) on the physicall object 4 in fig. 7, different to the first embodiment of fig. 5 of the user-operated agent 3. The physical object is another vehicle 4 in the environment of the ego-vehicle 3.

In case of fig.7, determining the phase angle based on a spatial position of the respective actuator includes modulating the phase angle Φ based on a distance d of the respective actuator to the other vehicle 4 (physical object). In particular, the assistance system 100 may generate and output the control signal to the actuator 110 based on respectively modified phase angle Φ according to Φ = R + distance, which is determined for each actuator element 111 of the actuator 110 individually, taking the position of the respective actuator element 111 into account. The term "distance" denotes the distance d between the respective actuator element 111 and the other vehicle 4 involved in the predicted event.

Then the stimulus signal output by the actuator 110 can provide spatial information on the predicted risk. For example, a ripple effect that is centered on the other vehicle 4 indicates from which direction relative to the ego-vehicle 3, a potential movement of the other vehicle 4 may influence a future evolvement of the predicted risk involving the ego-vehicle 3.

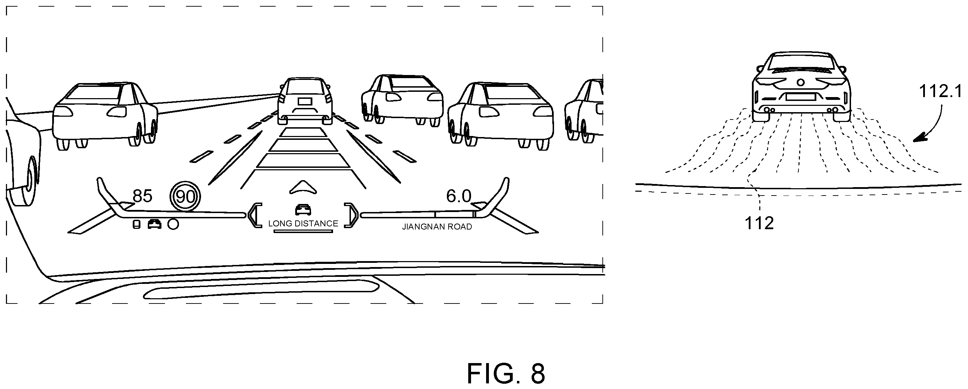

Fig. 8 illustrates a first application scenario using a visual HMI based on a head-up display (HUD) in a road traffic environment.

The first application example relies on an visual actuator 110 arranged in the dashboard(HUD) of the ego-vehicle 3 and operating in combination with a collision warning system as a particular example of an automotive assistance system 100.

The left portion of fig. 8 illustrates a general example of a visual HMI using a HUD in road traffic environment known from prior art.

The right portion of fig. 8 displays a visualization generated according to an embodiment of the computer-implemented method, which may be displayed in a HUD illustrated by the left portion of fi. 8and further modified by applying the computer-implemented method according to fig. 1.

The actuator 110 may include a single actuator element 111 in form of a projector outputting a visualization by displaying the predetermined visualization onto the windscreen in front of the user operating the ego-vehicle as a particular example of a user-operated agent. Displaying the visualization is controlled by the control signal provided by the computer-implemented method according to fig. 1.

The assistance system of fig. 8 provides collision warning by communicating a predicted collision risk in case of an approaching another vehicle 4 cruising on a same lane as the ego-vehicle 3. The visualization 112 shown in fig. 8represents a distance between the ego-vehicle 3 and the other vehicle 4.

Outputting the visualization 112 of the right portion of fig. 8 based on the control signal determined according to a method of an embodiment, which is in particular generated based on the determined periodic function and that includes the determined phase angle Φ based on the calculated risk measure, the assisted driver of the ego vehicle 3 is enabled to recognize from the displayed visualization 112 whether the distance between the ego-vehicle 3 and the other vehicle 4 is increasing or decreasing. Providing the collision warning by the distance visualization 112 including the determined phase angle has the effect of a ripple in the distance visualization 112 output by the actuator 110 in case the determined risk measure is changing. The ripple 112.1 in the displayed visualization 112 indicated in the right portion of fig. 7 enables the driver to grasp the tendency of change in the determined distance, the corresponding predicted risk and the corresponding calculated risk measure early. This early recognition is results due to the respectively determined phase angle of the periodic function that forms the basis for the distance visualization 112 output by the actuator 110.

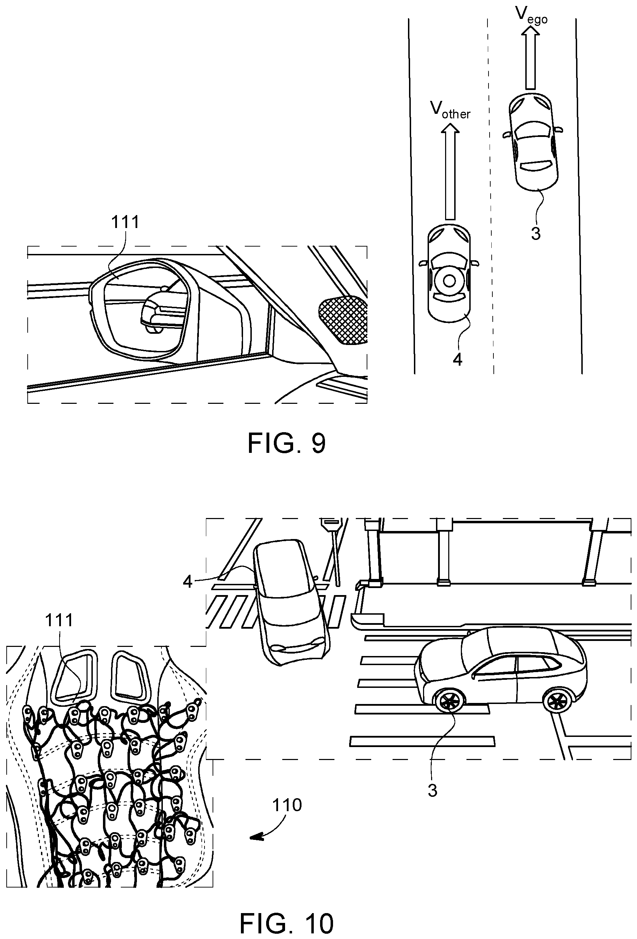

Fig. 9 illustrates a second application scenario using an acoustic HMI in a road traffic environment.

The second application example relies on an acoustic actuator 110 arranged in the ego-vehicle 3 and operating in combination with a collision warning system as a particular example of an automotive assistance system 100.

The actuator 110 may include a single actuator element 111 in form of a loudspeaker outputting an acoustic stimulus signal controlled by the control signal provided by the computer-implemented method according to fig. 1. Alternatively, the actuator 110 includes a plurality of loudspeakers as actuator elements 111.

The assistance system of fig. 9 provides collision warning by communicating a predicted collision risk in case of an approaching other vehicle 4 on the left lane is approaching the ego-vehicle 3 from the back of the ego-vehicle 3 cruising on the right lane of a road with two lanes into the driving direction of the ego-vehicle 3.

Outputting acoustic stimuli based on the control signal, which is generated based on the determined periodic function and that includes the determined phase angle Φ based on the calculated risk measure, the assisted driver of the ego vehicle 3 is enabled to recognize from the acoustic signal whether the other vehicle 4 on the left lane is approaching or the distance to the ego-vehicle 3 is increasing (departing). Providing the collision warning including the determined phase angle Φ has the effect of a pitch in the sound output by the actuator 110. The output sound enables the driver to early grasp the tendency of change in the predicted risk and the corresponding risk measure due to the respectively determined phase angle Φ of the periodic function that forms the basis for the stimuli 112 output by the actuator 110.

Fig. 10 illustrates a third application scenario using a haptic HMI in a road traffic environment.

In the third application scenario, the assistance method for assists a user in operating an ego-vehicle 3 as a driver. This particular application integrates the actuator 110 including a plurality of actuator elements 111 that are configured to output tactile stimuli to the user in the backrest of vehicle seat of the ego-vehicle 3. The back of the user is in physical contact with the array of actuator elements 111. Hence, the actuator 110 of fig. 10 is suitable to convey the information included in the determined periodic function determined according to fig. 1 to the assisted user. Alternatively or additionally, the actuator 110 may include actuator elements arranged integrally with a seatbelt or a steering device of the ego-vehicle 3.

The assistance system of fig. 10 controls the actuator 110 based on the determined periodic function as discussed with reference to fig. 1.

The stimuli output to the driver of the ego-vehicle 3 of fig. 10 enable the assistance system 100 to draw the attention of the driver towards a risk represented by another vehicle 4 approaching a same road junction as the ego-vehicle 3. In particular, the stimuli output by the actuator 110 enable the driver to early grasp the tendency of change due to the respectively determined phase angle Φ of the periodic function that forms the basis for the stimuli 112 output by the active actuator 111 of fig. 10.

The actuator arrangement of fig. 10 is particularly advantageous in providing information on a direction of the danger without burdening the visual senses of the driver by relying entirely on a haptic signaling to the assisted user.

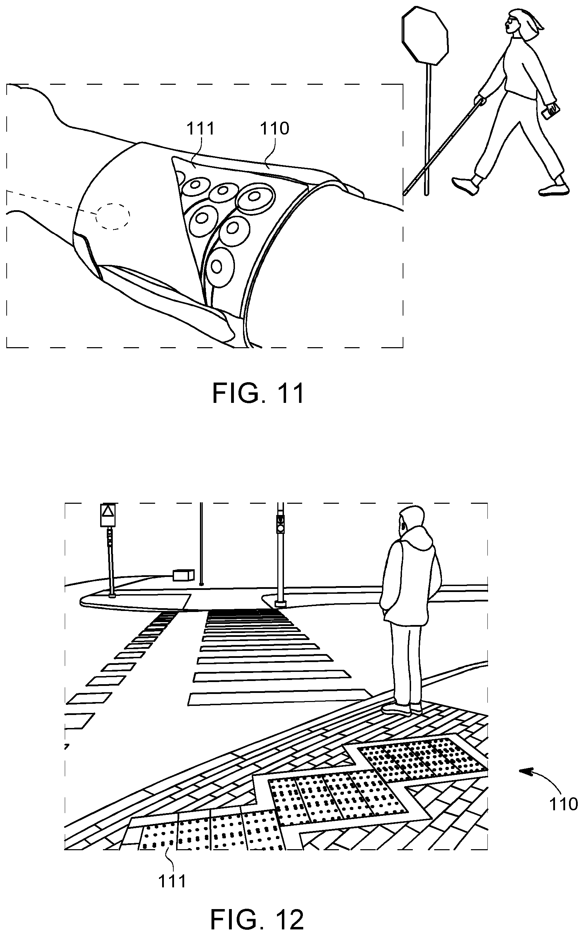

Fig. 11 illustrates a fourth application scenario using a haptic HMI adapted for assisting a visually impaired person moving in the environment.

The fourth application scenario employs the assistance method for assisting a visually impaired person in navigating within the environment. This particular application scenario relies on using an actuator 110 including a plurality of actuator elements 111 configured outputting to output tactile stimuli to the user. The user wears a bracelet as around its lower arm, which arranges the plurality of actuator elements 111 in contact with the skin of the user U. The bracelet of fig. 11 is one particular example of a wearable device, which may be suitable to convey the information included in the determined periodic function according to fig. 1 to the assisted user. Alternate wearable devices including the actuator 110 may include a headband, a helmet, a belt, gloves, or similar garments.

The assistance system 100 of fig. 12 controls the actuator 110 based on the determined periodic function as discussed with reference to fig. 1.

The stimuli output to the pedestrian as user in the embodiment of supporting a visually impaired person may draw the attention of the user towards a risk approaching static or moving objects represent and, in particular, enable the assisted user to early grasp the tendency of change due to the respectively determined phase angle Φ of the periodic function that forms the basis for the stimuli 112 output by the actuator 110.

Fig. 12 illustrates a fifth application scenario using a visual HMI integrated with infrastructure for assisting persons moving in the environment.

The actuator 110 shown in fig. 12 comprises an array light emitting elements, e.g. LEDs as actuator elements 111 integrated into the surface of the pavement adjacent to a road crossing. This particular embodiment illustrates the usefulness of the assistance method extending beyond the application field of driver assistance systems.

Sensors integrated within the road infrastructure may provide the sensor information including information on vehicles approaching the road crossing.

The assistance system 100 of fig. 12 controls the actuator 110 based on the determined periodic function as discussed with reference to fig. 1.

The stimuli output to the pedestrian as user in the embodiment illustrated by fig. 12 may draw the attention of the pedestrian towards the risk approaching vehicles represent at the road crossing.

Although the description of embodiments focuses on an application scenario in the field of automotive assistance systems, driver assistance systems present only one particularly useful application area of the invention. The invention is applicable in other mobility-related scenarios, in which multiple elements of the scenario in the environment differ in their associated relevance for the primary target of an assisted person (user) but compete for the assisted person's attention. Applying the assistance method 100 according to the attached claims increases safety by enhancing the assisted person's ability to perceive the environment where considered necessary without causing annoyance or impairing the assisted person's autonomy. Thus, acceptance of the assistance method with the assisted person is increased.

Thus, application areas include not only driver assistance in road traffic, but also navigator assistance in maritime traffic, or pilot assistance in air traffic scenarios.

A further advantageous application scenario for the invention concerns assistance in remote control of mobile vehicles in ground based, air based or sea based scenarios.

Fig. 13 illustrates a scenario using a visual or audible HMI integrated with a device for assisting persons in moving towards a target location in the environment, which is useful for understanding the invention defined in the claims. Fig. 13 shows the sixth application scenario in the particular use scenario of a mobile device assisting the user in finding a missing person in the environment, e.g. in case of a catastrophic event. The computer-implemented method may therefore be advantageous in guiding a rescue team towards survivors, e.g. buried persons after an avalanche event in the environment.

The physical object may be a missing person 11 carrying a wireless beacon, e.g., an avalanche beacon device. The assisted user is carrying a corresponding wireless device, e.g. a wireless avalanche transceiver. In the application example, the user 12 is moving and the missing person representing a target object for the search is static. According to the computer-implemented method, the parameter t_{min_distance} may be calculated.

The device for assisting the person may include an example of the assistance system 100 with a HMI adapted to output visual stimuli via a display or light emitting diodes, or to output acoustic stimuli via a loudspeakers or headphones to the assisted user 12.

When the assisted user 12 approaches the missing person 11 along the path 13, a distance from the device worn by the assisted person 12 to the beacon of the missing person 11 is decreasing as indicated by the distance circles 14, 15 around the position of the missing person 11. The assistance system 100 calculates decreasing values for the parameter t_{min_distance}. As a consequence of the decreasing values for the parameter t_{min_distance}, the angle Φ of the periodic function is also decreasing and a pitch of an audible sound signal output by device worn by the assisted person 12 increases. The audible sound signal with the increasing pitch informs the assisted user 12 of the change in distance and, based thereon, on the direction of the missing person 11. The assisted person 12 is accordingly supported in its attempt to locate the missing person 11 while moving in a search area in the environment.

Additionally or alternatively, the computer-implemented method may be applied to finding a position (location) of the physical object, e.g. a smartphone and guiding the user towards the position of the smartphone in an entirely corresponding manner as discussed with reference to the scenario.

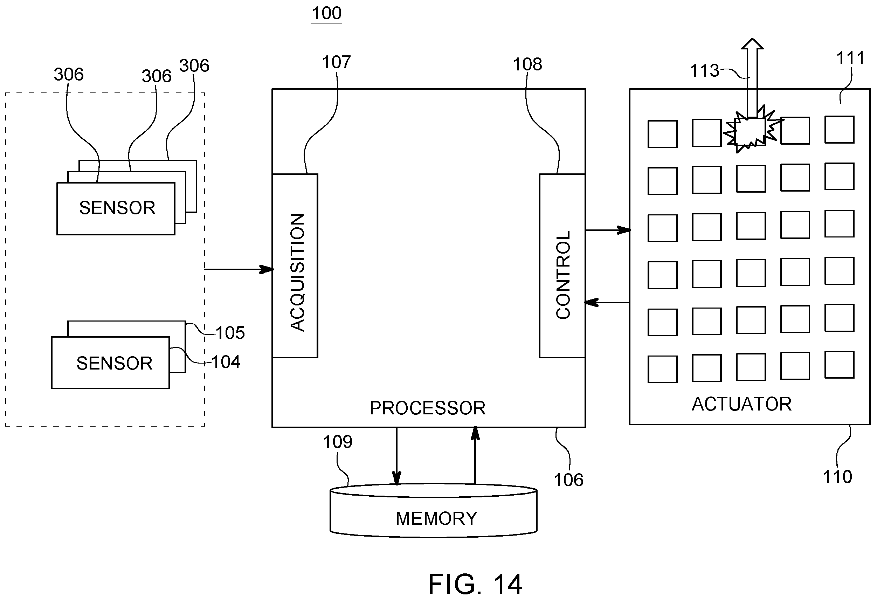

Fig. 14 displays a simplified block diagram providing an overview over structural elements of the assistance system 100 according to an embodiment. In the context of fig. 13, the user (assisted person) is a driver of the ego-vehicle 3.

The assistance system 100 comprises an acquisition module 107. The driver assistance system 100 acquires via the acquisition module 107 information (data) on the environment of the ego-vehicle 3, which is a dynamic environment characterized by changing traffic scenarios the ego-vehicle 3 and its driver corresponding to the assisted person have to navigate.

The acquisition module 107 may be implemented in software running on a processor 106 of the assistance system 100.

The acquired sensor information can include sensor data acquired by at least one sensor (sensor device) mounted on the ego-vehicle and which senses the environment of the ego-vehicle. The sensors may comprise active and/or passive sensors, e.g. camera sensors 101, radar sensors 102, lidar sensor 103, acoustic sensors, ultrasonic sensors, or temperature sensors in any combination.

The acquisition unit 107 may further acquire the movement information including location information of the ego-vehicle 3, velocity information, acceleration/deceleration information, heading information, steering angle information acquired by at least one further sensor (sensor device) mounted on the ego-vehicle 3, which acquires information of the ego-vehicle 3. The further sensor may comprise active and/or passive sensors, e.g. including an inertial measurement unit (IMU) 104, a global satellite system (GNSS) receiver, steering angle sensor, etc., in any combination.

The acquisition module 107 may further acquire data including map data from a map data provider.

Additionally or alternatively, acquisition module 107 acquires data including traffic data from a traffic data provider.

Additionally or alternatively, the acquisition module 107 acquires data including x-to-vehicle data via a vehicle communication module not shown in fig. 13. The vehicle communication module may, for example enable to acquire data from other vehicles representing physical objects in the environment of the ego-vehicle 3 via vehicle-to-vehicle communication. The vehicle communication module may acquire data from traffic infrastructure devices capable of infrastructure-to-vehicle communication. The vehicle communication module may include, for example, at least one wireless communication module operating according to a specific cellular communication standard such as LTE, LTE-Advanced, and 5G.

The sensors 104, 105 may include sensors acquiring sensor data from the interior of the ego-vehicle, e.g. for determining other physiological measures, such as a pupil-dilation, a heart rate and a skin conductance, which enable to estimate the vigilance of the user.

The assistance system 100 of fig. 13 comprises the processor 106 (electronic control unit, electronic data processing unit). The processor 106 may comprise a plurality of processing units arranged on the ego-vehicle 3. Alternatively, the processing units may be arranged spatially separated from the ego-vehicle 3 and communicating with the ego-vehicle 3 via the vehicle communication module, for example, thereby implementing a distributed processing architecture.

The processor 106 stores and reads data from a memory 109. The memory 109 in fig. 13 represents data storage capabilities for recording application data, for example, the periodic function, the modulated periodic function, mapping tables for mapping risk measure values to amplitude values, frequency values, and phase angle values of the periodic function. The memory 109 may store program code of the driver assistance system 100, or data generated and stored during execution of the program code of the driver assistance system 100. The memory 109 thus also performs as a RAM or ROM memory.

The processor 106 may not only run software implementing the acquisition module 107, but also software implementing the control module 108 for generating and outputting the control signal for controlling output of the generated warning signal by the actuator 110 based on the determined periodic function based on the calculated risk measure.

The processor 106, in particular, is configured to perform the steps of the computer-implemented method as discussed with reference to fig. 1.

The processor 106 may use the determined information on the attention and the vigilance of the user to tailor the provided assistance to the assisted person to its estimated actual needs, according to a determined scene context and stored data about human behavioral patterns. The assistance system 100 may amplify a stimulus modulation by the modulation signal further whenever the assistance system 100 determines the vigilance of the assisted person, or the determined attention of the assisted person to the task is lower than a threshold that corresponds to a predetermined minimum attention or vigilance level required.

The determined attention level or the vigilance of the assisted person may further be used by the assistance system 100 for adapting a gradient of the control signal for driving the actuator 110 after the risk measure significantly decreases.

Alternatively, the assistance system 100 may determine the user's individual need for support and adapt the control signal accordingly unless the assisted person shows a sufficiently high level of vigilance. This processing results in enforcing a safety margin in the assistance to the user.

The processor 106 provides the control signal to the actuator 110. The control signal provided to the actuator 110 includes the risk information in respectively determined values of the amplitude A, the frequency ω, and the phase angle Φ of the periodic function.

Fig. 13 shows the actuator 110 including a plurality of elementary actuators 111 arranged in a matrix structure.

Alternatively, the actuator 110 may arrange the plurality of elementary actuators 111 in another planar or three-dimensional spatial arrangement.

Alternatively, the actuator 110 may include a single actuator element 111.

The control signal for driving the actuator may enable the processor 106 to drive the actuator elements 111 individually, in particular with respectively adapted values for the amplitude A, the frequency ω, and the phase angle Φ of the periodic function.

In particular, the processor 106 may generate and output the control signal via the control module 108 based on respectively modified phase angle Φ: $Φ = R + distance ,$ which is determined for each actuator element 111 individually, taking the position of the respective actuator element 111 into account. The term "distance" denotes a distance between the respective actuator element 111 and the physical object involved in the predicted event.

The control module 108 outputs the control signal to the actuator 110, in particular the plurality of actuator elements 111 for outputting the risk related information included in the stimulus signal 113 to the assisted user.

The actuator 110 may provide position information and orientation information of the actuator 110 or of the individual actuator elements 111 to the processor 106, e.g. via the control module 108 of the processor 106. The processor 106 may determine the periodic function based on the position information and orientation information received from the actuator 110.

Fig. 13 shows the actuator element 111 arranged in the center of the rectangular actuator array of the actuator 110 outputting the stimulus 113 to the user.

The actuator 110 may include a loudspeaker or an array of loudspeakers for outputting acoustic signals to the user. A loudness or a pitch of an acoustic signal vary based on the control signal provided by the processor 106.

Alternatively or additionally, the actuator 110 may include a display for outputting visual signals, e.g. including a visualization 112 or an icon, to the user.

Alternatively or additionally, the actuator 110 may include a HUD configured to display a predetermined a visualization 112 or icon to the user.

The icon may represent a warning sign, e.g. a red triangle that may be switched on and off, or whose brightness is varied based on the control signal provided by the processor 106.

Alternatively or additionally, the actuator 110 may include visual light elements in a dashboard of the ego-vehicle, or light-strips on the center console or arranged around a side mirror or back mirror of the ego-vehicle 3 may further point towards or highlight a direction towards a predicted element of risk in the environment of the ego-vehicle 3.

Alternatively or additionally, the actuator 110 may include an array of light emitting elements such as LEDs arranged in the surface of road infrastructure. In this particular embodiment, the structural elements processor 106 and actuator 110 may be arranged spatially separate and connected via a communication link.

The actuator 110 may include a tactile output elements or an array of tactile output elements for haptic signals to the user. A strength (amplitude A), a frequency ω and a phase angle Φ of the output haptic signal may vary based on the control signal provided by the processor 106.

All steps which are performed by the various entities as well as the functionalities described to be performed by the various entities are intended to mean that the respective entity is adapted to or configured to perform the respective steps and functionalities.

In the claims as well as in the description the word "comprising" does not exclude the presence of other elements or steps. The indefinite article "a" or "an" does not exclude a plurality.

A single element or other unit may fulfill the functions of several entities or items recited in the claims.

## Claims

1. Computer-implemented method for informing a user (12) of a risk for the user (12) or a user-operated agent (3), the method comprising:
acquiring sensor information of the environment of the user (12) or the user-operated agent (3);
predicting a risk for the user (12) or the user-operated agent (3) based on the acquired sensor information;
determining a risk measure for the predicted risk ;
determining a frequency and a phase angle of a periodic function based on the determined risk measure; and
controlling output of an information signal based on the determined periodic function via at least one actuator (110, 111) to the user (12); and
**characterized in**
**that** the method comprises determining the phase angle based on a sum of the determined risk measure and a distance between the user or the user-operated agent (3) and at least one physical object (4).

2. The computer-implemented method according to claim 1, wherein the method comprises predicting at least one trajectory of at least one of the user or the user-operated agent (3) and the at least one physical object (4) in the environment;
determining at least one time-to-minimum distance between the user or the user-operated agent (4) and the at least one physical object (4) based on the predicted at least one trajectory, and calculating the risk measure based on the determined time-to-minimum distance.

3. The computer-implemented method according to one of the preceding claims, wherein the method comprises
calculating a time-to-collision for at least one predicted collision between the user or the user-operated agent (3), and calculating the risk measure for the predicted at least one collision based on the calculated time-to-collision.

4. The computer-implemented method according to one of the preceding claims, wherein determining an amplitude, the frequency, and the phase angle of the periodic function includes mapping the determined risk measure to corresponding values of the amplitude, the frequency, and the phase angle of the periodic function.

5. The computer-implemented method according to one of the preceding claims, wherein the method comprises
setting the amplitude of the periodic function based on the determined risk measure multiplied with a first factor,
setting the frequency of the periodic function based on the determined risk measure multiplied with a second factor, and
setting the phase angle of the periodic function based on the determined risk measure multiplied with a third factor.

6. The computer-implemented method according to one of the preceding claims, wherein the method comprises determining the frequency based on a sum of the determined risk measure and a derivative of the determined risk measure.

7. The computer-implemented method according to one of the preceding claims, wherein the periodic function is trigonometric function, in particular a sine function.

8. The computer-implemented method according to one of the preceding claims, wherein the method comprises
outputting the information signal based on the determined periodic function by varying at least one parameter of an output of the at least one actuator (110, 111), wherein the at least one parameter includes at least one of a brightness or color of a visual output, a vibration of a haptic output, displaying an icon and pitch or loudness of a sound or frequency of triggering auditory notification.

9. The computer-implemented method according to one of the preceding claims, wherein the method comprises
outputting the information signal based on a modulated periodic function via a plurality of actuators (111) of an array of actuators (110) of a human machine interface to the user, wherein the periodic function driving each actuator (111) of the plurality of actuators (111) includes the phase angle further modulated based on a spatial position of the respective actuator (111).

10. The computer-implemented method according to claim 9, wherein
the array of actuators (111) is centered on the user or the user-operated agent (4), and
modulating the phase angle based on a spatial position of the respective actuator (111) includes modulating the phase angle based on a distance of the respective actuator (111) to the physical object (4).

11. The computer-implemented method according to claim 9, wherein
the array of actuators (111) is centered on the physical object (4), and
modulating the phase angle based on a spatial position of each actuator (111) includes modulating the phase angle based on a distance of the respective actuator (111) to the user or the user-operated agent (3).

12. Computer program with program-code means for executing the steps according to one of the preceding claims, when the program is executed on a computer or digital signal processor.

13. Assistance system for informing a user of a risk for the user or a user-operated agent (3), the system comprising:
an acquisition module (107) configured to acquire information of the environment of the user or the user-operated agent (3);
at least one processor (106) configured to
predict a risk for the user or the user-operated agent (3) based on the acquired information,
determine a risk measure for the predicted risk,
determine a frequency and a phase angle of a periodic function based on the calculated risk measure, and
control outputting an information signal based on the determined periodic function to the user (12) via at least one actuator (110, 111); and
**characterized in**
**that** the at least one processor (106) is configured to determine the phase angle based on a sum of the determined risk measure and a distance between the user or the user-operated agent (3) and the physical object (4).

## Patentansprüche

1. Computerimplementiertes Verfahren zum Informieren eines Benutzers (12) über ein Risiko für den Benutzer (12) oder einen benutzergesteuerten Agenten (3), wobei das Verfahren Folgendes umfasst:
Erfassen von Sensorinformationen der Umgebung des Benutzers (12) oder des benutzergesteuerten Agenten (3);
Vorhersagen eines Risikos für den Benutzer (12) oder den benutzergesteuerten Agenten (3) basierend auf den erfassten Sensorinformationen;
Bestimmen eines Risikomaßes für das vorhergesagte Risiko;
Bestimmen einer Frequenz und eines Phasenwinkels einer periodischen Funktion basierend auf dem bestimmten Risikomaß; und
Steuern der Ausgabe eines Informationssignals basierend auf der bestimmten periodischen Funktion über mindestens einen Aktor (110, 111) an den Benutzer (12); und
**dadurch gekennzeichnet, dass**
das Verfahren Bestimmen des Phasenwinkels basierend auf einer Summe des bestimmten Risikomaßes und eines Abstands zwischen dem Benutzer oder dem benutzergesteuerten Agenten (3) und mindestens einem physischen Objekt (4) umfasst.

2. Computerimplementiertes Verfahren nach Anspruch 1, wobei das Verfahren Vorhersagen mindestens einer Trajektorie von mindestens einem von dem Benutzer oder dem benutzergesteuerten Agenten (3) und dem mindestens einen physischen Objekt (4) in der Umgebung umfasst;
Bestimmen mindestens einer Zeit bis zum minimalen Abstand zwischen dem Benutzer oder dem benutzergesteuerten Agenten (4) und dem mindestens einen physischen Objekt (4) basierend auf der vorhergesagten mindestens einen Trajektorie und Berechnen des Risikomaßes basierend auf der bestimmten Zeit bis zum minimalen Abstand.

3. Computerimplementiertes Verfahren nach einem der vorhergehenden Ansprüche, wobei das Verfahren Folgendes umfasst:
Berechnen einer Zeit bis zur Kollision für mindestens eine vorhergesagte Kollision zwischen dem Benutzer oder dem benutzergesteuerten Agenten (3) und Berechnen des Risikomaßes für die vorhergesagte mindestens eine Kollision basierend auf der berechneten Zeit bis zur Kollision.

4. Computerimplementiertes Verfahren nach einem der vorhergehenden Ansprüche, wobei das Bestimmen einer Amplitude, der Frequenz und des Phasenwinkels der periodischen Funktion Zuordnen des bestimmten Risikomaßes zu entsprechenden Werten der Amplitude, der Frequenz und des Phasenwinkels der periodischen Funktion beinhaltet.

5. Computerimplementiertes Verfahren nach einem der vorhergehenden Ansprüche, wobei das Verfahren Folgendes umfasst:
Einstellen der Amplitude der periodischen Funktion basierend auf dem bestimmten Risikomaß multipliziert mit einem ersten Faktor,
Einstellen der Frequenz der periodischen Funktion basierend auf dem bestimmten Risikomaß multipliziert mit einem zweiten Faktor und
Einstellen des Phasenwinkels der periodischen Funktion basierend auf dem bestimmten Risikomaß multipliziert mit einem dritten Faktor.

6. Computerimplementiertes Verfahren nach einem der vorhergehenden Ansprüche, wobei das Verfahren Bestimmen der Frequenz basierend auf einer Summe des bestimmten Risikomaßes und einer Ableitung des bestimmten Risikomaßes umfasst.

7. Computerimplementiertes Verfahren nach einem der vorhergehenden Ansprüche, wobei die periodische Funktion eine trigonometrische Funktion, insbesondere eine Sinusfunktion, ist.

8. Computerimplementiertes Verfahren nach einem der vorhergehenden Ansprüche, wobei das Verfahren Folgendes umfasst:
Ausgeben des Informationssignals basierend auf der bestimmten periodischen Funktion durch Variieren mindestens eines Parameters einer Ausgabe des mindestens einen Aktors (110, 111), wobei der mindestens eine Parameter mindestens eines von einer Helligkeit oder Farbe einer visuellen Ausgabe, einer Vibration einer haptischen Ausgabe, Anzeigen eines Symbols und einer Tonhöhe oder Lautstärke eines Schalls oder einer Frequenz des Auslösens einer akustischen Benachrichtigung beinhaltet.

9. Computerimplementiertes Verfahren nach einem der vorhergehenden Ansprüche, wobei das Verfahren Folgendes umfasst:
Ausgeben des Informationssignals basierend auf einer modulierten periodischen Funktion über eine Mehrzahl von Aktoren (111) eines Arrays von Aktoren (110) einer Mensch-Maschine-Schnittstelle an den Benutzer, wobei die periodische Funktion, die jeden Aktor (111) der Mehrzahl von Aktoren (111) ansteuert, den Phasenwinkel beinhaltet, der ferner basierend auf einer räumlichen Position des jeweiligen Aktors (111) moduliert ist.

10. Computerimplementiertes Verfahren nach Anspruch 9, wobei
das Array von Aktoren (111) auf den Benutzer oder den benutzergesteuerten Agenten (4) zentriert ist, und
das Modulieren des Phasenwinkels basierend auf einer räumlichen Position des jeweiligen Aktors (111) Modulieren des Phasenwinkels basierend auf einem Abstand des jeweiligen Aktors (111) zu dem physischen Objekt (4) beinhaltet.

11. Computerimplementiertes Verfahren nach Anspruch 9, wobei
das Array von Aktoren (111) auf das physische Objekt (4) zentriert ist, und
das Modulieren des Phasenwinkels basierend auf einer räumlichen Position jedes Aktors (111) Modulieren des Phasenwinkels basierend auf einem Abstand des jeweiligen Aktors (111) zu dem Benutzer oder dem benutzergesteuerten Agenten (3) beinhaltet.

12. Computerprogramm mit Programmcodemitteln zum Ausführen der Schritte nach einem der vorhergehenden Ansprüche, wenn das Programm auf einem Computer oder digitalen Signalprozessor ausgeführt wird.

13. Assistenzsystem zum Informieren eines Benutzers über ein Risiko für den Benutzer oder einen benutzergesteuerten Agenten (3), wobei das System Folgendes umfasst:
ein Erfassungsmodul (107), das dazu ausgelegt ist, Informationen der Umgebung des Benutzers oder des benutzergesteuerten Agenten (3) zu erfassen;
mindestens einen Prozessor (106), der zu Folgendem ausgelegt ist:
Vorhersagen eines Risikos für den Benutzer oder den benutzergesteuerten Agenten (3) basierend auf den erfassten Informationen vorherzusagen, Bestimmen eines Risikomaßes für das vorhergesagte Risiko,
Bestimmen einer Frequenz und eines Phasenwinkels einer periodischen Funktion basierend auf dem berechneten Risikomaß, und
Steuern der Ausgabe eines Informationssignals basierend auf der bestimmten periodischen Funktion über mindestens einen Aktor (110, 111) an den Benutzer (12); und
**dadurch gekennzeichnet, dass**
der mindestens eine Prozessor (106) dazu ausgelegt ist, den Phasenwinkel basierend auf einer Summe des bestimmten Risikomaßes und eines Abstands zwischen dem Benutzer oder dem benutzergesteuerten Agenten (3) und dem physischen Objekt (4) zu bestimmen.

## Revendications

1. Procédé mis en œuvre par ordinateur pour informer un utilisateur (12) d'un risque pour l'utilisateur (12) ou un agent manœuvré par utilisateur (3), le procédé comprenant :
l'acquisition d'informations de capteur de l'environnement de l'utilisateur (12) ou de l'agent manœuvré par utilisateur (3) ;
la prédiction d'un risque pour l'utilisateur (12) ou l'agent manœuvré par utilisateur (3) sur la base des informations de capteur acquises ;
la détermination d'une mesure de risque pour le risque prédit ;
la détermination d'une fréquence et d'un angle de phase d'une fonction périodique sur la base de la mesure de risque déterminée ; et
la commande de l'envoi, en sortie, d'un signal d'informations, sur la base de la fonction périodique déterminée par l'intermédiaire d'au moins un actionneur (110, 111), à l'utilisateur (12) ; et
**caractérisé en ce**
**que** le procédé comprend la détermination de l'angle de phase sur la base d'une somme de la mesure de risque déterminée et d'une distance entre l'utilisateur ou l'agent manœuvré par utilisateur (3) et au moins un objet physique (4).

2. Procédé mis en œuvre par ordinateur selon la revendication 1, dans lequel le procédé comprend la prédiction d'au moins une trajectoire d'au moins un de l'utilisateur ou de l'agent manœuvré par utilisateur (3) et de l'au moins un objet physique (4) dans l'environnement ;
la détermination d'au moins un temps avant distance minimum entre l'utilisateur ou l'agent manœuvré par utilisateur (4) et l'au moins un objet physique (4) sur la base de l'au moins une trajectoire prédite, et le calcul de la mesure de risque sur la base du temps avant distance minimum déterminé.

3. Procédé mis en œuvre par ordinateur selon l'une des revendications précédentes, dans lequel le procédé comprend
le calcul d'un temps avant collision pour au moins une collision prédite entre l'utilisateur ou l'agent manœuvré par utilisateur (3), et le calcul de la mesure de risque pour l'au moins une collision prédite sur la base du temps avant collision calculé.

4. Procédé mis en œuvre par ordinateur selon l'une des revendications précédentes, dans lequel la détermination d'une amplitude, de la fréquence, et de l'angle de phase de la fonction périodique inclut le mappage de la mesure de risque déterminée sur des valeurs correspondantes de l'amplitude, de la fréquence, et de l'angle de phase de la fonction périodique.

5. Procédé mis en œuvre par ordinateur selon l'une des revendications précédentes, dans lequel le procédé comprend
le réglage de l'amplitude de la fonction périodique sur la base de la mesure de risque déterminée multipliée avec un premier facteur,
le réglage de la fréquence de la fonction périodique sur la base de la mesure de risque déterminée multipliée avec un deuxième facteur, et
le réglage de l'angle de phase de la fonction périodique sur la base de la mesure de risque déterminée multipliée avec un troisième facteur.

6. Procédé mis en œuvre par ordinateur selon l'une des revendications précédentes, dans lequel le procédé comprend la détermination de la fréquence sur la base d'une somme de la mesure de risque déterminée et d'une dérivée de la mesure de risque déterminée.

7. Procédé mis en œuvre par ordinateur selon l'une des revendications précédentes, dans lequel la fonction périodique est une fonction trigonométrique, en particulier une fonction sinusoïdale.

8. Procédé mis en œuvre par ordinateur selon l'une des revendications précédentes, dans lequel le procédé comprend
l'envoi, en sortie, du signal d'informations, sur la base de la fonction périodique déterminée, en variant au moins un paramètre d'une sortie de l'au moins un actionneur (110, 111), dans lequel l'au moins un paramètre inclut au moins une parmi une luminosité ou couleur d'une sortie visuelle, une vibration d'une sortie haptique, affichant une icône et une hauteur ou intensité d'un son ou d'une fréquence de notification auditive de déclenchement.

9. Procédé mis en œuvre par ordinateur selon l'une des revendications précédentes, dans lequel le procédé comprend
l'envoi, en sortie, du signal d'informations, sur la base d'une fonction périodique modulée, par l'intermédiaire d'une pluralité d'actionneurs (111) d'un réseau d'actionneurs (110) d'une interface homme-machine, à l'utilisateur, dans lequel la fonction périodique entraînant chaque actionneur (111) de la pluralité d'actionneurs (111) inclut l'angle de phase modulé davantage sur la base d'une position spatiale de l'actionneur respectif (111).

10. Procédé mis en œuvre par ordinateur selon la revendication 9, dans lequel
le réseau d'actionneurs (111) est centré sur l'utilisateur ou l'agent manœuvré par utilisateur (4), et
la modulation de l'angle de phase sur la base d'une position spatiale de l'actionneur respectif (111) inclut la modulation de l'angle de phase sur la base d'une distance de l'actionneur respectif (111) à l'objet physique (4).

11. Procédé mis en œuvre par ordinateur selon la revendication 9, dans lequel
le réseau d'actionneurs (111) est centré sur l'objet physique (4), et
la modulation de l'angle de phase sur la base d'une position spatiale de chaque actionneur (111) inclut la modulation de l'angle de phase sur la base d'une distance de l'actionneur respectif (111) jusqu'à l'utilisateur ou l'agent manœuvré par utilisateur (3).

12. Programme d'ordinateur avec des moyens codes de programme pour exécuter les étapes selon l'une des revendications précédentes, lorsque le programme est exécuté sur un ordinateur ou processeur de signal numérique.

13. Système d'assistance pour informer un utilisateur d'un risque pour l'utilisateur ou un agent manœuvré par utilisateur (3), le système comprenant :
un module d'acquisition (107) configuré pour acquérir des informations de l'environnement de l'utilisateur ou de l'agent manœuvré par utilisateur (3) ;
au moins un processeur (106) configuré pour prédire un risque pour l'utilisateur ou l'agent manœuvré par utilisateur (3) sur la base des informations acquises, déterminer une mesure de risque pour le risque prédit,
déterminer une fréquence et un angle de phase d'une fonction périodique sur la base de la mesure de risque calculée, et
commander l'envoi, en sortie, d'un signal d'informations, sur la base de la fonction périodique déterminée, à l'utilisateur (12), par l'intermédiaire d'au moins un actionneur (110, 111) ; et
**caractérisé en ce**
**que** l'au moins un processeur (106) est configuré pour déterminer l'angle de phase sur la base d'une somme de la mesure de risque déterminée et d'une distance entre l'utilisateur ou l'agent manœuvré par utilisateur (3) et l'objet physique (4).
